# EUROPEAN PATENT SPECIFICATION

(11) **EP 1 482 760 B1**
(45) Date of publication and mention of the grant of the patent: **02.05.2007**
(21) Application number: 04397003.7
(22) Date of filing: 20.01.2004
(51) Int. Cl.: H04Q 7/38

(54) **A method and a system for transferring an electronic service in a communication network to a terminal**
Verfahren und System zum Transfer eines elektronischen Dienstes zu einem Endgerät in einem Kommunikationsnetz
Procédé et système pour le transfert d'un service électronique à un terminal dans un réseau de communication

(30) Priority: 21.01.2003 FI 20030091
(43) Date of publication of application: 01.12.2004
(73) Proprietor: TeliaSonera Finland Oyj, 00510 Helsinki (FI)
(72) Inventor: Karhu, Pekka, 00330, Helsinki (FI); Keisala, Ilkka, 02710, Espoo (FI); Korhonen, Jouni, 11100, Riihimäki (FI); Vitikka, Ilpo, 00100, Helsinki (FI)
(74) Representative: Rönkkö, Taina Mirjam

(56) References cited:
- EP-A- 1 126 732
- US-A1- 2001 036 224
- US-A1- 2001 055 975
- US-A1- 2002 035 605
- US-B1- 6 175 740

## Description

The present invention relates to a method for transferring an electronic service in a communication network to a terminal as described in the preamble of the independent claim 1. In addition, the present invention relates to a system for transferring an electronic service in a communication network to a terminal as described in the preamble of the independent claim 5. The present invention relates also to a proxy server for transferring an electronic service in a communication network to a terminal as described in the preamble of the independent claim 9.

The use of Internet services is traditionally implemented in such a manner that a fixed connection is formed from a computer to an Internet Service Provider by using a browser application, via which the network address (URL, Uniform Resource Locator) of the desired service page is input or selected. This network address is formed of a domain name, which is modified to an IP address (Internet Protocol) used by the Internet. The computer of the user of the network service can be identified in the Internet on the basis of the IP address of the computer in question. The specification of URL addresses is based on the IETF (Internet Engineering Task Force) specifications "Universal Resource Identifiers in WWW" (RFC 1630) and "Functional Requirements for Internet Resource Locators (RFC 1736), and the specification can be read more in detail in the corresponding IETF documents rfc1630.txt and rfc1736.txt.

The disconnection of Internet browsing from a fixed connection offers the user an access to Internet content via portable wireless devices. These portable wireless devices are, for example, a WAP phone, a PDA (Personal Digital Assistant) and a laptop computer. If the transmission path being used is a mobile telephone network, such as GPRS, UMTS, the device is to be provided with a SIM card (Subscriber Identification Module), which comprises the identification data of the terminal, such as the MSISDN (Mobile Subscriber International ISDN number) and IMSI (International Mobile Subscriber Identification) identifiers. The MSISDN number is used to route phone calls, and to identify the user of the mobile communication device, the individual IMSI code is used, which the mobile communication device then reports to the network in connection with login. In addition, these identifiers are included in the Home Location Register (HLR) and the Visitor Location Register (VLR), which maintain data on the location of the terminal by means of different cells for the use of the Mobile Station Center (MSC). Between the terminal and the mobile station center function the Base Station Subsystem (BSS) and the Base Station Controller (BSC), the first of which (BSS) is connected to the terminal and the latter (BSC) to the mobile station center.

The access of mobile terminals to the Internet can also be implemented by utilizing Wireless Local Area Network technology (WLAN, IEEE802.11b). This can be carried out by means of a special WLAN card, with which a data transfer connection is formed to a wireless local area network. The wireless local area network is formed of base stations (Access Points), one of which must be provided with a wireless connection from the terminal. From the base station there is a connection to a Local Area Network (LAN) and further to the Internet. This type of a wireless local area network is typically provided by the possessor of the location of the base station.

A wireless local area network provided by the operator (Operator Wireless LAN, OWLAN) makes it possible to form one flexible and secure data transfer network between the physically separated outlets of a company. Thus, all the wireless terminals located within the range of operation of the base stations of the company have access to the company intranet, databases, and e-mail in any outlet of the company. Therefore, the operating ranges may be located at even long distances physically and geographically, but there is no difference in the operation of the network from the user's point of view. The OWLAN utilizes SIM identification, by means of which the WLAN technology and the GSM infrastructure can be combined, thus allowing the described operation. A conventional SIM card is installed in the user's WLAN card, which SIM card includes the services of the client in the home location register of the network. This enables the user to access the desired service in a specific local area network by means of the basic protocol (MAP, Mobile Application Part) of the mobile telephone network (GSM), in which case the identification data can easily be checked from any operator network connected to the mobile telephone network.

The portability and mobility of the devices creates new services, such as location-based services (LBS). A location-based service is a value added network service, which utilizes the location data provided by the user or by means of a positioning device or the device to be positioned. The location-based service consists of positioning, the transmission of the location data of the user, and the data connected to the service. Relevant information on the service based on positioning is provided to that environment where the user of the mobile communication device is at the moment the search occurs.

Another location-based service form is the location-aware service, where the services being used are determined on the grounds of which ones are locally available in the environment in question. This type of a service substantially associates user tracking, where the location data of the user is transmitted, for example, at regular intervals to the service provider.

The location of the user for the use of the services can be established by means of the mobile communication networks when the mobile communication device is in the switching mode, in which case location of the mobile communication device is known by the mobile station center. Network positioning can be implemented by means of the cell identifiers of the mobile communication network, which is referred to as Cell-of-Origin positioning (COO). In the network positioning it is also possible to utilize the input direction of the signal sent by the mobile communication device, which is referred to as Angle-of-Arrival positioning (AOA). In addition, the length of the transit time (TOA, Time of Arrival) of the signal sent by the mobile communication device can be utilized in network positioning, as well as the transit time differences (E-OTD, Enhanced Observed Time Difference) of the transmitted signals. The location data of the user of the mobile communication device can, in addition, be established by means of positioning devices, such as GPS devices. The positioning device can calculate the coordinates of its own location by means of the positioning system. GPS positioning is based on measuring distances between the receiver and at least three satellites on the basis of the transit time of the radio signal. The GPS device can be a separate device or it can be embedded as a part of the mobile communication device. When the GPS chip is added to the terminal, this is referred to as the A-GPS method. The A-GPS (assisted GPS) is a network assisted GPS, i.e. a combination of satellite positioning and network positioning, where the mobile communication network provides additional data to the receiver in order to accelerate and focus the positioning. The A-GPS utilizes the mobile communication network, from which the terminal receives the ephemeris data of the satellites, in which case it can send the location calculation work to be performed by the actual positioning server. Thus, the terminal itself is not loaded, which is why the positioning is accelerated considerably. Positioning can also be implemented as short distance positioning, which focuses on a specific limited area, and is based on the transmission of a short-range signal. The short-range connection can be formed by means of wireless local area networks (WLAN, HiperLan), Bluetooth technique, or identifiers (RFID).

Publication US 6,175,740 B1 discloses a method for determining the resolution of the display according to the location of the subscriber unit and the operation performed. When the resolution is resolved, the requested operation is performed with the determined resolution. The operation may be e.g. displaying the location of the subscriber unit.

Publication EP 1 126 732 A2 discloses transmission of location based services to a mobile terminal. A request for location information is transmitted from the mobile terminal to a location information providing server before the actual service request. In response to the request, the location information providing server acquires the location information and sends it to the mobile terminal. A dynamic user profile in the mobile terminal is updated with the location information, and then transmitted with the service request information. By this, the mobile terminal receives the requested service depending on the location of the terminal.

Publication US 2001/0036224 A1 relates to a method that enables the delivery of targeted data to users of wireless transceivers based on user location positioning. The solution of the publication uses location positioning to determine the profile of a wireless, and in particular the behavioural, habitual and psychographic profile in terms of wireless user's interests, habits and preferences suggested by a user's location positioning pattern.

It is an aim of the present invention to present a method for providing location-based services. It is especially an aim of the invention to provide a fast method for transmitting the location data of a user. In the solution according to the invention, the identifier data of the user is not transmitted to the service provider, which improves the data security of network traffic.

To attain these purposes, the method according to the invention is primarily characterized in what will be presented in the characterizing part of the independent claim 1. The system according to the invention is characterized in what will be presented in the characterizing part of the independent claim 5. The proxy server according to the invention is characterized in what will be presented in the characterizing part of the independent claim 9.

By means of the invention the location data of the user is immediately within the use of the service provider and the service, in which case no special interface is necessary for the positioning inquiry of the service provider. In addition, the invention provides the advantage that the identifiers of the user are not necessary to be sent to the service provider, in which case, for example, the MSISDN number of the user is only in the use of the operator. In addition, the invention makes it possible to provide location-aware services, which are based on user tracking, in which case the service provider can be charged on the location data when the party performing the positioning and the service provider are different suppliers.

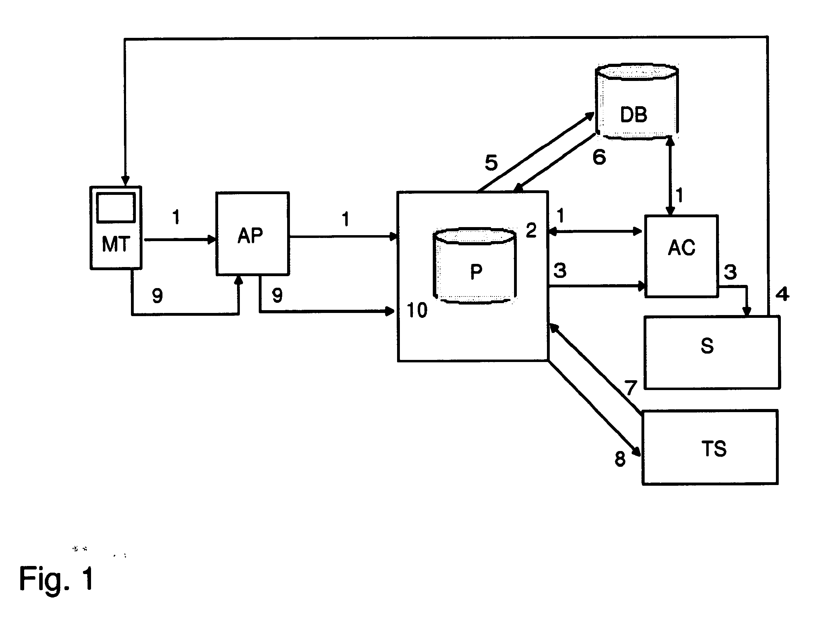

The present invention will be described in more detail with reference to the following drawings, in which
- Fig. 1: shows one advantageous embodiment of the invention for transmitting location data, and

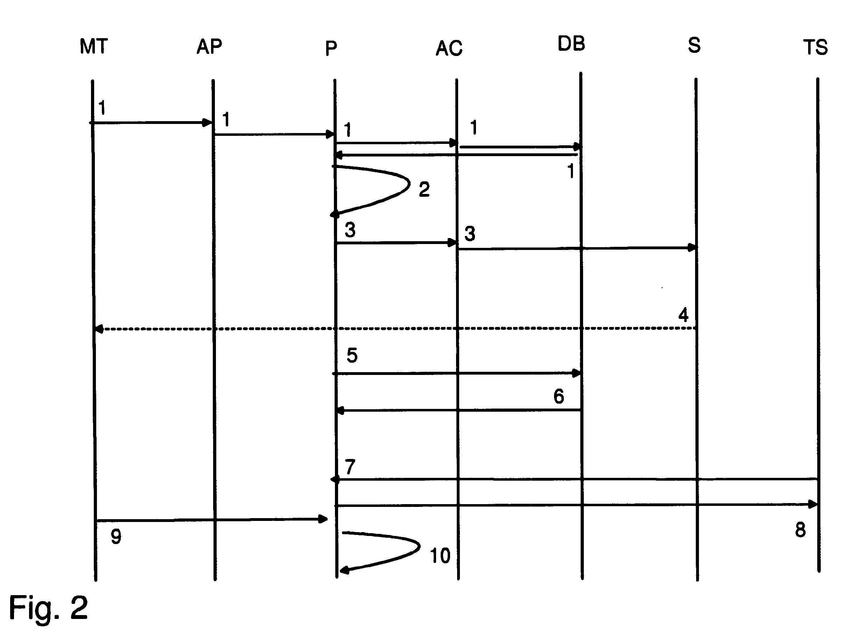

- Fig. 2: shows a signalling figure according to one advantageous embodi ment of the invention.

It is an aim of the present invention to provide location-based services via a wireless data transfer network. The wireless data transfer network is advantageously a wireless local area network (WLAN) or a HiperLAN/2 network. The invention relates to transmitting location data to the server of the service provider. The location data of the user can be established by means of any method according to related technique, where, for example, the MAC address of the local area network card of the mobile communication device and/or the IP address of the base station are utilized.

The system according to the invention comprises a terminal MT, a base station AP, a user database server DB, and an access controller AC. The user database server DB is advantageously a RADIUS server (Remote Access Dial-In User Service), where are listed the MAC addresses of allowed network cards. The RADIUS server performs user identification on the basis of these MAC addresses. In addition, the system according to the invention comprises a proxy server P, where the network addresses of the network services S requiring location data are stored, as well as a positioning service TS for positioning the terminal MT. These above-mentioned elements are advantageously controlled by one supplier, such as the network operator. The system can be formed around three suppliers in such a manner that the first network operator is arranged to provide mobile communication functions (phone calls, data traffic, etc.) to the user, the second network operator TS to provide positioning services to the first network operator, and the service provider to offer a network service S to the user.

The use of the network service S, which can be provided by the operator's own service provider or a party outside the operator, begins in a known way with an identification process (point 1), which is started when the user creates a connection from the terminal MT with the access controller AC. The user transmits the user identifier/password pair to the access controller AC, which sends an identification request to the user server. The user data server checks the data of the user from its database DB and responds to the request of the access controller AC by generating a dynamic session key. The session key is transmitted to the base station AP, in which case the data transfer can be started via the base station AP. In the WLAN environment the control of user data is centralized advantageously to the database DB of one user data server. Thus, the users can, when logging in via the WLAN network, use the same user data as in the actual network. The variable, occasionally generated passwords for each user are implemented by means of the user data server.

Network addresses of services requiring location data are determined to the proxy server P, in which case it is possible to check whether the service page requested by the user requires data of the location of the user. The network addresses can be located in a database attached to the proxy server P, which database can physically be located in the proxy server or separately from it. The database is advantageously maintained by the operator. In connection with the service request, a check is performed in the database, on the basis of which it is analysed whether the network address that is the target of the request needs location data of the user.

When the user requests a service from the service provider, the location data of the user established by the positioning service TS is transferred to the proxy server P. The positioning service TS functions according to some known positioning method. Upon receiving data on the location of the user from the positioning service TS, the proxy server P performs a check on whether the service that is the target of the request requires data on the location of the user. If this is the case, the proxy server automatically attaches the location data to the network address in the service request (point 2). At the same time, it is checked in what form the service that is the target of the request can handle the location data, whereupon the location data is modified to such a form. The adapted service request, which includes the network address of the desired service, as well as the location data of the user, is directed to the service provider S (point 3), which implements the desired service (point 4) for the user. The data transfer network used for transferring the service can be a local area network or the mobile communication network used by the mobile communication device, or the like. It is obvious to a man skilled in the art that the role of the base station AP in transferring the service to the terminal changes depending on the selection of the data transfer network. In addition, substantially to each service request which the location data of the user is chained to, is attached an event information, on the basis of which it is possible to perform the charging based on the event in question. In other words, thus the service is activated for the user by means of charge reservation.

The service provider can also request the location data of the user. When establishing the location, the service provider requests the location data for a user identifier known by it, where a service request has come from. The request is transmitted to the proxy server P, which establishes, by means of the user identifier, the mobile phone identifier corresponding to it, such as the MSISDN number (points 5, 6) from the database DB of the user data server. On the basis of this mobile phone identifier, it is possible to search the location data of the user from the proxy server P or request the positioning service TS to establish (7, 8) it by some known means. The identified location data is transmitted further to a service provider, in which case the location-based service can be further provided to the user. When the user logs out from the WLAN network (point 9), the data connected to the session is removed from the proxy server (point 10).

It is important to note that with the method according to the invention, the identifier of the mobile phone (MSISDN) is not transmitted to the service provider, but only the established location data, which improves the data security of the user. In addition, it is to be noted that when the service provider is a party outside the operator, the operator can charge the service provider for the positioning. This type of a situation may arise, if a company wants to provide its employees services based on location data and to use an operator to establish the location data. The country-specific intranet pages of an international company, as well as allocated announcements are good examples of the described need. Also, it is to be noted that the above-described functions can be arranged to be performed by one actor, or divided between several actors, as in the description. However, the most substantial point is to note that the core element of the invention is the proxy server, which is arranged to receive a service request, to receive the location data of the terminal that made the service request, as well as to form a service request in the form required by the service provider in such a manner that the location of the user appears in the formed service request. The relationships of the other actors with the central element of the invention may vary.

It is also clear that the above-described example of the present invention is one advantageous embodiment of the invention. Thus, the invention is not limited solely to it, but it can be applied within the scope of the appended claims.

## Claims

1. A method for transferring an electronic service in a communication network to a terminal (MT) in a signalling connection with a base station (AP), the location of which terminal (MT) is determined, **characterized in that** in the method the communication network addresses of electronic services requiring location data of the terminal (MT) are stored in a proxy server (P), in which case, after a service request has been received from the terminal (MT), it is checked whether the requested electronic service requires data on the location of the terminal (MT), and if this is the case, determined location data as such or as modified to a form required by the electronic service is attached to the service request, and the adapted service request transmitted to the electronic service in order to transfer the electronic service via a short-range signalling connection to the terminal (MT).

2. The method according to claim 1, **characterized in that** data on the location of the terminal (MT) is chained to the service request.

3. The method according to claim 1, **characterized in that** data on the location of the terminal (MT) is requested on the basis of a service login identifier of the terminal (MT), in which case the location data is determined on the basis of an identifier code of the terminal (MT).

4. The method according to any of the claims 1 to 2, **characterized in that** in the method the location data of the terminal (MT) is determined on the basis of an address of the base station (AP).

5. A system for transferring an electronic service in a communication network to a terminal (MT), which system comprises at least one terminal (MT) and at least one base station (AP), which terminal (MT) is in a signalling connection with said base station (AP), in which case the location of said terminal (MT) is known by the system, **characterized in that**, in addition, the system comprises a proxy server (P) for storing communication network addresses of services requiring location data of the terminal (MT), which proxy server (P) is arranged to check, after it has received a service request from the terminal (MT), whether the requested electronic service requires data on the location of the terminal (MT), and if this is the case, said proxy server (P) is arranged to identify the form of the location data required by the electronic service and to modify the location data, if necessary, to said form, whereupon the system is further arranged to attach the determined location data as such or as modified to the service request and to transmit the adapted service request from said proxy server to the electronic service in order to transfer the electronic service via a short-range signalling connection to the terminal (MT).

6. The system according to claim 5, **characterized in that** the system is also arranged to chain data on the location of the terminal (MT) to the service request.

7. The system according to claim 5, **characterized in that** the electronic service is arranged to request data on the location of the terminal on the basis of a service login identifier of the terminal (MT), in which case said system is arranged to determine the location data on the basis of an identifier code of the terminal (MT).

8. The system according to any of the claims 5 to 7, **characterized in that** the system also comprises means for identifying the location of the terminal (MT).

9. A proxy server for transferring an electronic service in a communication network to a terminal (MT), the location of which is known by the proxy server (P), which proxy server (P) comprises a signalling connection to at least one base station as well as to at least one electronic service, **characterized in that**, in addition, the proxy server (P) comprises means for storing the communication network addresses of electronic services requiring location data of the terminal (MT), in which case the proxy server (P) is arranged to check, after it has received a service request from the terminal (MT), whether the requested electronic service requires data on the location of the terminal (MT), and if this is the case, said proxy server (P) is arranged to identify the form of the location data required by the electronic service and to modify the location data, if necessary, to said form, whereupon the proxy server (P) is arranged to attach the determined location data as such or as modified to the service request and to transmit the adapted service request to the electronic service in order to transfer the service via a short-range signalling connection to the terminal (MT).

## Patentansprüche

1. Verfahren zum Übertragen eines elektronischen Dienstes in einem Kommunikationsnetzwerk an ein Endgerät (MT) in einer Signalisierungsverbindung mit einer Basisstation (AP), wobei der Standort des Endgerätes (MT) bestimmt wird, **dadurch gekennzeichnet, dass** bei dem Verfahren die Kommunikationsnetzwerk-Adressen von elektronischen Diensten, die Standortdaten des Endgerätes (MT) benötigen, in einem Proxy-Server (P) gespeichert werden, wobei in dem Fall, nachdem eine Dienstanforderung des Endgerätes (MT) empfangen wurde, es überprüft wird, ob der angeforderte elektronische Dienst die Standortdaten des Endgerätes (MT) benötigt, und falls dies der Fall ist, bestimmte Standortdaten als solche oder in ein Format modifizierte, das von dem elektrischen Dienst benötigt wird, an die Dienstanforderung angehängt werden und die angepasste Dienstanforderung an den elektronischen Dienst gesendet wird, um den elektronischen Dienst über eine Nahbereichs-Signalisierungsverbindung an das Endgerät (MT) zu übertragen.

2. Verfahren nach Anspruch 1, **dadurch gekennzeichnet, dass** Daten über den Standort des Endgerätes (MT) mit der Dienstanforderung verkettet werden.

3. Verfahren nach Anspruch 1, **dadurch gekennzeichnet, dass** Daten über den Standort des Endgerätes (MT) auf der Basis einer Diensteinwahlidentifikation des Endgerätes (MT) angefordert werden, wobei in diesem Fall die Standortdaten auf der Basis eines Identifikationscodes des Endgerätes (MT) bestimmt werden.

4. Verfahren nach einem der Ansprüche 1 bis 2, **dadurch gekennzeichnet, dass** bei dem Verfahren die Standortdaten des Endgerätes (MT) auf der Basis einer Adresse der Basisstation (AP) bestimmt werden.

5. System zum Übertragen eines elektronischen Dienstes in einem Kommunikationsnetzwerk an ein Endgerät (MT), wobei das System zumindest ein Endgerät (MT) und zumindest eine Basisstation (AP) aufweist, und das Endgerät (MT) in einer Signalisierungsverbindung mit der Basisstation (AP) steht, wobei in diesem Fall der Standort des Endgerätes (MT) dem System bekannt ist, **dadurch gekennzeichnet, dass** das System zusätzlich einen Proxy-Server (P) zum Speichern von Kommunikationsnetzwerk-Adressen der Dienste aufweist, die Standortdaten des Endgerätes (MT) benötigen, wobei der Proxy-Server (P) eingerichtet ist, nachdem er eine Dienstanforderung des Endgerätes (NT) empfangen hat, zu überprüfen, ob der angeforderte elektronische Dienst Daten über den Standort des Endgerätes (MT) benötigt, und falls dies der Fall ist, ist der Proxy-Server (P) eingerichtet, das Format der Standortdaten zu identifizieren, die von dem elektronischen Dienst benötigt werden, und falls erforderlich die Standortdaten in das Format zu modifizieren, wonach das System ferner eingerichtet ist, die bestimmten Standortdaten als solche oder modifiziert an die Dienstanforderung anzuhängen und die angepasste Dienstanforderung von dem Proxy-Server an den elektronischen Dienst zu senden, um den elektronischen Dienst über eine Nahbereichs-Signalisierungsverbindung an das Endgerät (MT) zu übertragen.

6. System nach Anspruch 5, **dadurch gekennzeichnet, dass** das System auch eingerichtet ist, Daten über den Standort des Endgerätes (MT) mit der Dienstanforderung zu verketten.

7. System nach Anspruch 5, **dadurch gekennzeichnet, dass** der elektronische Dienst eingerichtet ist, Daten über den Standort des Endgerätes auf der Basis einer Diensteinwahlidentifikation des Endgerätes (MT) anzufordern, wobei in diesem Fall das System eingerichtet ist, die Standortdaten auf der Basis eines Identifikationscodes des Endgerätes (MT) zu bestimmen.

8. System nach einem der Ansprüche 5 bis 7, **dadurch gekennzeichnet, dass** das System auch Einrichtungen zum Identifizieren des Standortes des Endgerätes (MT) aufweist.

9. Proxy-Server zum Übertragen eines elektronischen Dienstes in einem Kommunikationsnetzwerk an ein Endgerät (MT), dessen Standort dem Proxy-Server (P) bekannt ist, wobei der Proxy-Server (P) eine Signalisierungsverbindung mit mindestens einer Basisstation sowie mit mindestens einem elektronischen Dienst aufweist, **dadurch gekennzeichnet, dass** der Proxy-Server (P) zusätzlich Einrichtungen zum Speichern der Kommunikationsnetzwerk-Adressen der elektronischen Dienste aufweist, die Standortdaten des Endgerätes (MT) benötigen, wobei in diesem Fall der Proxy-Server (P) eingerichtet ist, nachdem er eine Dienstanforderung von dem Endgerät (MT) empfangen hat, zu überprüfen, ob der angeforderte elektronische Dienst Daten über den Standort des Gerätes (MT) benötigt, und falls dies der Fall ist, ist der Proxy-Server (P) eingerichtet, das Format der Standortdaten zu identifizieren, die von dem elektronischen Dienst benötigt werden, und falls erforderlich, die Standortdaten in dieses Format zu modifizieren, wonach der Proxy-Server (P) eingerichtet ist, die bestimmten Standortdaten als solche oder modifiziert an die Dienstanforderung anzuhängen und die angepasste Dienstanforderung an den elektronischen Dienst zu senden, um den Dienst über eine Nahbereichs-Signalisierungsverbindung an das Endgerät (MT) zu übertragen.

## Revendications

1. Procédé pour transférer un service électronique dans un réseau de communication sur un terminal (MT) selon une connexion de signalisation avec une station de base (AP), la localisation du terminal (MT) étant déterminée, **caractérisé en ce que**, selon le procédé, les adresses de réseau de communication de services électroniques nécessitant des données de localisation du terminal (MT) sont stockées dans un serveur proxy (P), auquel cas, après qu'une requête de service a été reçue depuis le terminal (MT), il est vérifié si le service électronique demandé a besoin de données concernant la localisation du terminal (MT) et si c'est le cas, des données de localisation déterminées telles quelles ou telles que modifiées selon une forme requise pour le service électronique sont liées à la requête de service, et la requête de service adaptée est transmise au service électronique afin de transférer le service électronique via une connexion de signalisation de plage courte sur le terminal (MT).

2. Procédé selon la revendication 1, **caractérisé en ce que** des données concernant la localisation du terminal (MT) sont chaînées sur la requête de service.

3. Procédé selon la revendication 1, **caractérisé en ce que** des données concernant la localisation du terminal (MT) sont demandées sur la base d'un identificateur de connexion de service du terminal (MT), auquel cas les données de localisation sont déterminées sur la base d'un code d'identificateur du terminal (MT).

4. Procédé selon l'une quelconque des revendications 1 et 2, **caractérisé en ce que**, selon le procédé, les données de localisation du terminal (MT) sont déterminées sur la base d'une adresse de la station de base (AP).

5. Système pour transférer un service électronique dans un réseau de communication sur un terminal (MT), lequel système comprend au moins un terminal (MT) et au moins une station de base (AP), lequel terminal (MT) est selon une connexion de signalisation avec ladite station de base (AP), auquel cas la localisation dudit terminal (MT) est connue par le système, **caractérisé en ce que**, en outre, le système comprend un serveur proxy (P) pour stocker des adresses de réseau de communication de service nécessitant des données de localisation du terminal (MT), lequel serveur proxy (P) est agencé pour vérifier, après qu'il a reçu la requête de service en provenance du terminal (MT), si le service électronique demandé a besoin de données concernant la localisation du terminal (MT), et si c'est le cas, le serveur proxy (P) est agencé pour identifier la forme des données de localisation requises pour le service électronique et pour modifier les données de localisation si nécessaire selon ladite forme, suite à quoi le système est en outre agencé pour lier les données de localisation déterminées telles quelles ou telles que modifiées à la requête de service et pour transmettre la requête de service adaptée depuis ledit serveur proxy au service électronique afin de transférer le service électronique via une connexion de signalisation de plage courte sur le terminal (MT).

6. Système selon la revendication 5, **caractérisé en ce que** le système est également agencé pour chaîner des données concernant la localisation du terminal (MT) sur la requête de service.

7. Système selon la revendication 5, **caractérisé en ce que** le service électronique est agencé pour demander des données concernant la localisation du terminal sur la base d'un identificateur de connexion de service du terminal (MT), auquel cas ledit système est agencé pour déterminer les données de localisation sur la base d'un code d'identificateur du terminal (MT).

8. Système selon l'une quelconque des revendications 5 à 7, **caractérisé en ce que** le système comprend également un moyen pour identifier la localisation du terminal (MT).

9. Serveur proxy pour transférer un service électronique dans un réseau de communication sur un terminal (MT) dont la localisation est connue par le serveur proxy (P), lequel serveur proxy (P) comprend une connexion de signalisation sur au moins une station de base de même que sur au moins un service électronique, **caractérisé en ce que**, en plus, le serveur proxy (P) comprend un moyen pour stocker les adresses de réseau de communication de services électroniques demandant des données de localisation du terminal (MT), auquel cas le serveur proxy (P) est agencé pour vérifier, après qu'il a reçu une requête de service en provenance du terminal (MT), si oui ou non le service électronique demandé a besoin de données concernant la localisation du terminal (MT) et si c'est le cas, ledit serveur proxy (P) est agencé pour identifier la forme des données de localisation requises pour le service électronique et pour modifier les donnée de localisation si nécessaire selon ladite forme, suite à quoi le serveur proxy (P) est agencé pour lier les données de localisation déterminées telles quelles ou telles que modifiées à la requête de service et pour transmettre la requête de service adaptée au service électronique afin de transférer le service via une connexion de signalisation de plage courte au terminal (MT).
